# EUROPÄISCHE PATENTSCHRIFT

(11) **EP 0 451 535 B1**
(45) Veröffentlichungstag und Bekanntmachung des Hinweises auf die Patenterteilung: **07.06.1995**
(21) Anmeldenummer: 91103948.5
(22) Anmeldetag: 14.03.1991
(51) Int. Cl.: B29C 44/00, B29C 43/24, B29K 61/20

(54) **Verfahren zur Herstellung eines Formteils aus Melaminharzschaumstoff**
Method for producing an article from a melamin resin foam
Méthode pour la production d'un article à partir d'une mousse de résine mélamine

(30) Priorität: 14.03.1990 DE 4008046
(43) Veröffentlichungstag der Anmeldung: 16.10.1991
(73) Patentinhaber: Illbruck Production S.A., CH-2892 Courgenay (CH)
(72) Erfinder:
(74) Vertreter: Müller, Enno, Dipl.-Ing.

(56) Entgegenhaltungen:
- EP-A- 0 111 860
- EP-A- 0 208 227
- DE-A- 2 915 474
- DE-A- 3 825 251
- GB-A- 2 096 923
- JP-A-62 212 109
- US-A- 3 906 134
- US-A- 4 788 100
- PATENT ABSTRACTS OF JAPAN, Band 7, Nr. 59 (M-199)[1204], 11. März 1983;& JP-A-57 205 125 (M. KAWAGISHI) 16-12-1982

## Beschreibung

Die Erfindung betrifft ein Verfahren zur Herstellung eines Formteils aus duroplastischem Melaminharzschaumstoff sowie ein Formteil aus duroplastischem Melaminharzschaumstoff.

Melaminharzschaumstoffe an sich sind bekannt, wozu lediglich beispielsweise auf die EP-B1 111 860, von der die Oberbegriffe der Ansprüche 1 und 13 ausgehen, und die dort noch weiter angezogene Literatur verwiesen wird.

Melaminharzschaumstoff ist ein duroplastischer Schaumstoff, der sich also an sich nicht durch Wärme bleibend verformen läßt. Es ist aber erwünscht, auch aus Melaminharzschaumstoff bleibend verformte Formteile herstellungstechnisch möglichst einfach erzeugen zu können.

Der Erfindung stellt sich daher zunächst die Aufgabe, ein rationelles Verfahren zur Herstellung von Formteilen aus duroplastischem Melaminharzschaumstoff anzugeben.

Diese Aufgabe ist bei einem Verfahren gemäß dem Anspruch 1 gelöst. Erfindungsgemäß ist vorgesehen, daß ein Formteil-Rohling aus Melaminharzschaumstoff mit einem wärmeaushärtenden Bindemittel versehen wird und anschließend eine Verpressung unter Wärmeeinwirkung durchgeführt wird. Erfindungsgemäß wird also die Eigenart von offenzelligem Schaumstoff, insbesondere des annähernd 100% offenzelligen Melaminharzschaumstoffes, einen Zusatz in wässriger, pastenförmiger oder, wie weiter unten noch im einzelnen erläutert wird, schaumiger Form in seinem Volumen ohne weiteres aufzunehmen zu können, ausgenutzt, um den an sich nicht durch Wärmeeinwirkung bleibend verformbaren Melaminharzschaumstoff durch Verpressen unter Wärmeeinwirkung bleibend umzuformen. Das Bindemittel "fixiert" unter Wärmeeinwirkung gleichsam den verformten Melaminharzschaumstoff in seiner neuen Form. In Ausgestaltung ist vorgesehen, daß das Bindemittel (zunächst) oberflächlich auf den Formteil-Rohling aufgebracht wird. Durch eine wässrige Einstellung dringt das Bindemittel auch von selbst weiter in das Innere des Rohlings ein. Auch wird eine weitere Verteilung in dem Rohling im Zuge des Verpressens erreicht. Beispielsweise kann das Bindemittel einem Leim vergleichbar auf die Oberfläche aufgestrichen werden. Als Bindemittel bietet sich hierzu Phenolharz in wässriger Lösung an. Beispielsweise ist dieses unter dem Handelsnamen Batzelite HW 2513 von der Firma Rüttgerswerke bekannt. Als Melaminharzschaumstoff kann beispielsweise solcher verwandt werden, wie er unter dem Handelsnamen Basotect von der Firma BASF bekannt ist. Eine weitere Ausgestaltung der Erfindung sieht vor, daß der Formteil-Rohling mit dem Bindemittel imprägniert wird. Das Bindemittel wird durch die Imprägnation in dem gesamten Volumen, oder jedoch im wesentlichen in dem gesamten Volumen, verteilt. Als Bindemittel bietet sich hierbei auch Melaminharz in wässriger Lösung an. Zum Beispiel kann das unter dem Handelsnamen Ukadan MH von der Firma Schill + Seilacher bekannte Melaminharz verwendet werden. Das Imprägnieren und auch das oberflächliche Aufbringen von Bindemittel in wässriger Lösung ist jedoch mit einem gewissen Nachteil verbunden, da das Bindemittel einen relativ hohen Wasseranteil besitzt. Dieser Wasseranteil muß durch die Wärmeeinwirkung bei dem Verformen oder in einem vorherigen Verfahren entfernt werden. Dies ist energetisch aufwendig bzw. im Hinblick auf die erforderliche Presszeit unrationell. Eine weitere Ausgestaltung der Erfindung schlägt daher auch vor, das Bindemittel in schaumiger Form zu verwenden. Hierzu wird das Bindemittel, vorzugsweise das Melaminharz selbst, schaumig geschlagen. Grundsätzlich kann aber auch das erwähnte Phenolharz schaumig geschlagen werden. Der Schaum wird möglichst trocken eingestellt. Sodann wird der Schaum in den Melaminharzschaumstoff imprägniert. Hierbei ergibt sich eine wesentliche Verminderung des Wassergehaltes. Die Verformung läßt sich rationeller durchführen. Während bei dem Imprägnieren mit Bindemittel auf wässriger Basis sich noch ein Materialeinsatz von etwa 750 g pro Qudratmeter ergibt, bei einer Dicke von etwa 20 mm, kann dieser Materialeinsatz bei der Zugabe von Bindemittel in schaumiger Form auf etwa 300 g pro Quadratmeter gesenkt werden, wobei jeweils etwa die Hälfte der genannten Menge Wasser ist. Bei einem Werkzeug mit einer Temperatur von etwa 200 bis 210 C° kann dann eine Verprägung eines so vorbereiteten, das heißt mit Bindemittel in schaumiger Form durchsetzten Formteil-Rohlings in etwa 30 Sekunden vorgenommen werden.

Beim Herstellen eines Formteils, wie es zuvor beschrieben worden ist und auch bereits bei der Herstellung von Formteilrohlingen der genannten Art, fallen Abfallstücke, Schneidabfälle oder dergleichen an. Diese Teilstücke werden gemäß einer weiteren Ausgestaltung der Erfindung gleichfalls zu einem Melaminschaumstoff-Rohling verarbeitet, und zwar dadurch, daß eine Mehrzahl solcher Teilstücke aus mit Bindemittel, insbesondere Melaminharz versehenem Melaminschaumstoff, in einer Pressform platten- oder blockartig miteinander verpreßt werden. Der imprägnierte Melaminharzschaumstoff entfaltet auch oberflächlich eine Klebewirkung, so daß sich zunächst ohne wesentliche Wärmezugabe solche Teilstücke in einer Form miteinander verpressen lassen. Grundsätzlich ist dies auch mit einem Bindemittel auf Phenolharzbasis, wie weiter oben erwähnt, möglich. Solche platten- oder quaderförmigen Rohlinge aus miteinader verpreßten, getränkten Melaminharzschaumstoff-Teilstücken lassen sich dann zu Formteilen weiterverarbeiten. Diese Rohlinge werden in der bereits erwähnten Weise unter Wärmezugabe in einer Pressform in die gewünschte Form verpreßt. Grundsätzlich kann die Verpressung der Teilstücke und die bleibende Verformung durch Wärmezugabe auch gleichzeitig in einer Pressform durchgeführt werden. In weiterer Ausgestaltung ist hierzu vorgesehen, daß die Teilstücke vor Eingabe in die Pressform flockenartig aufbereitet werden. Unterschiedlich große Teilstücke werden also in Flocken etwa gleicher Größe zerteilt, um so formmäßig im wesentlichen homogene Teile zu erhalten. Weiter ist in einer Ausgestaltung vorgesehen, daß die Oberflächen der Teilstücke vor einer Verpressung zumindest teilweise mit Bindemittel versehen werden. Zusätzlich zu dem imprägnierten Bindemittel können die Oberflächen also noch des weiteren mit Bindemittel versehen werden. Hierdurch kann ein insbesondere festes Aneinanderhaften der Teilstücke, vorzugsweise der flockenartigen Teilstücke, erreicht werden. Hierbei bietet sich an, als Bindemittel auch Melaminharz in Pulverform zu verwenden. Da es hier nur um eine Oberflächenverbindung geht, die zur bleibenden Verformung erforderliche Tränkung des gesamten Volumens bereits zuvor durchgeführt worden ist, reicht eine Verwendung von pulverförmigem Bindemittel zum Zwecke des Oberflächenverbundes aus. Es stellt sich der Vorteil ein, daß mit dieser Zugabe von Bindemittel keine Erhöhung des Wassergehaltes einhergeht, die nachfolgende Prägezeit also nicht (negativ) beeinflußt wird.

Die Erfindung betrifft desgleichen auch ein Formteil aus Melaminharzschaumstoff, das nach einem der beschriebenen Verfahren hergestellt ist. Insbesondere ein Formteil aus Melaminharzschaumstoff, das sich aus Teilstücken, gegebenenfalls flockenartigen Teilstücken, zusammensetzt.

Die Imprägnierung des Melaminharzschaumstoffes, insbesondere die Imprägnierung mit einem Bindemittel in schaumiger Form wird bevorzugt auf einer gesonderten Anlage vorgenommen. Hierbei werden Formteilrohlinge aus Melaminharzschaumstoff mit einem Bindemittel, insbesondere einem solchen in schaumiger Form dadurch imprägniert, daß ein Formteil-Rohling durch einen Walzenspalt zweier sich gegensinnig bewegenden Walzen geführt wird und in den Walzenspalt das Bindemittel gegeben wird, wobei derWalzenspalt kleiner eingestellt ist, als eine unbeeinflußte Dicke des Formteil-Rohlings. Es wird also die Eigenart des Schaumstoffes, sich nach Komprimierung zurückzustellen, ausgenutzt. Bevorzugt wird das Bindemittel beidseitig zu dem bahnenförmigen Schaumstoff-Rohling auf den Breitflächen zugegeben.

Besonders bevorzugt ist weiterhin, daß das Bindemittel mit einem Zusatz zur oleophoben und/oder hydrophoben Einstellung versehen wird. Diese Zusätze werden etwa in einem Verhältnis von 1 bis 3% (mengenmäßig) zu der Gesamtmenge des Bindemittels zugegeben. Bevorzugt handelt es sich hierbei um Zusätze wie sie etwa unter dem Handelsnamen Evoral G 20 und Stralin V 4181 bekannt sind.

Nachstehend ist die Erfindung des weiteren anhand der beigefügten Zeichnung, die jedoch lediglich Ausführungsbeispiele darstellt, erläutert.

Hierbei zeigt:
- Fig. 1: in perspektivischer Form ein Melaminharzschaumstoff-Formteil;
- Fig. 2: ein Formteil gemäß Fig. 1, aus flockenartigen Teilstücken zusammengesetzt; und
- Fig. 3: eine schematische Darstellung einer Anlage zum Imprägnieren von Melaminharzschaumstoff-Rohlingen.

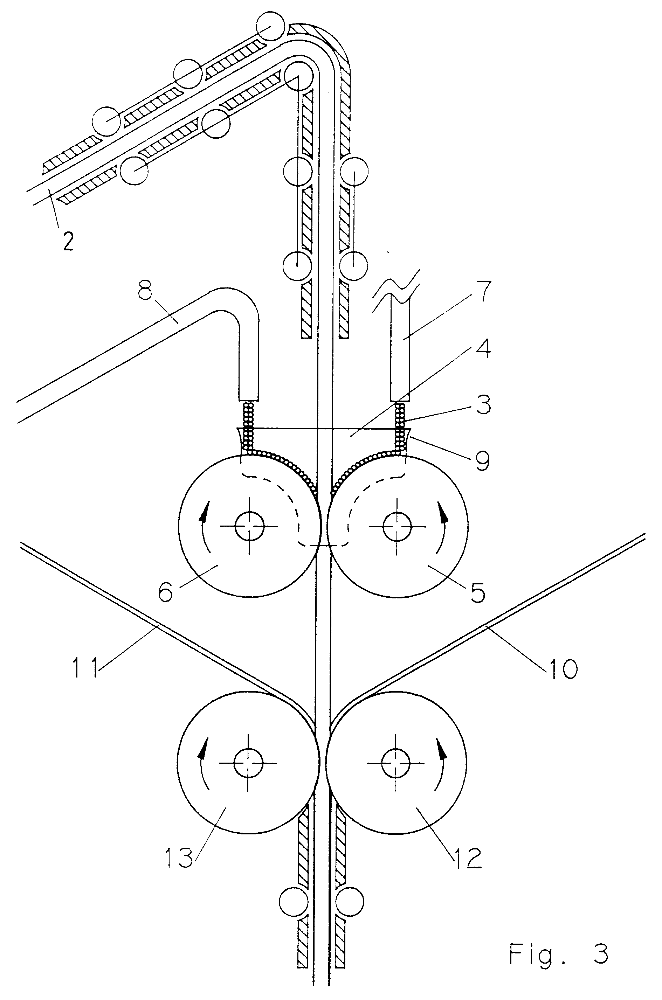

Dargestellt und beschrieben ist zunächst ein Formteil 1, das nach einem wie vorstehend beschriebenen Verfahren hergestellt ist. Hierzu wird ein Melaminharzschaumstoff-Rohling 2, wie er in Fig. 3 angedeutet ist, mit einem Imprägierungsmittel 3, beispielsweise in schaumiger Form, imprägniert. Grundsätzlich kann es sich bei dem Imprägnierungsmittel um Phenolharz in wässriger Lösung, zum Beispiel Batzelite HW 2513 von der Firma Rüttgerswerke, handeln. Daüber hinaus kann es sich auch um Melaminharz in wässriger Lösung handeln, beispielsweise Ukandan MH von der Firma Schill + Seilacher. Bevorzugt handelt es sich, wie auch in Fig. 3 dargestellt, um schaumig geschlagenes Melaminharz. Das Bindemittel ist vorzugsweise mit einem schaumbildenden Zusatz versehen, nämlich beispielsweise Diphasol HP von der Firma Ciba-Geigy. Grundsätzlich liegt ein Mischungsverhältnis von etwa 80% Wasser und 20% Harz, letzteres also beispielsweise Melaminharz, vor. Hierzu werden bevorzugt, wenn das Bindemittel in schaumiger Form verwendet werden soll, noch 2% Diphasol HP gegeben.

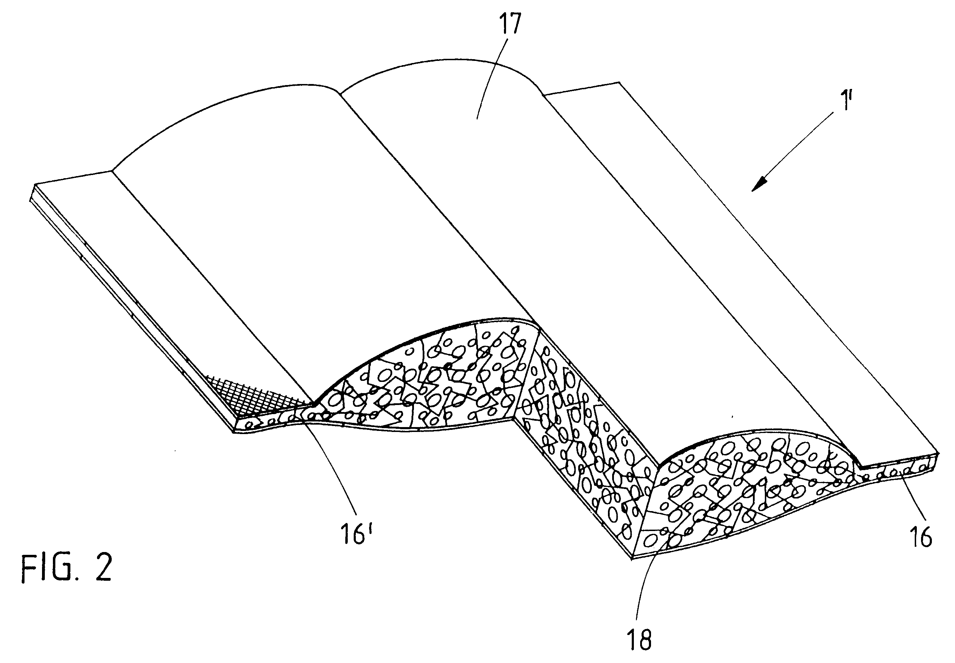

In einer Pressform werden die Schaumstoff-Rohlinge dann zu den Formteilen 1 bzw. 1' (Fig. 2) verpresst. Hierbei ist bei den Ausführungsbeispielen ein stark komprimierter Randbereich 16,16' vorgesehen und eine konurierte Oberfläche 17. Der Darstellung gemäß Fig. 2 ist zu entnehmen, daß das Formteil 1' aus einem Flockenverbundschaumstoff, hergestellt wie weiter oben im einzelnen erläutert, sich zusammensetzt. Es sind die Grenzflächen 18 angedeutet.

Bezüglich des Bindemittels können diesem weiter bevorzugt noch Zusätze zur hydrophoben und oleophoben Einstellung beigegeben werden. Diese Zusätze bewegen sich etwa in einem Mengenverhältnis von 1 bis 3% zur Gesamtmenge des Bindemittels. Bevorzugt handelt es sich hierbei um Zusätze unter den Handelsnamen Evoral G 20 von der Firma Schill + Seilacher oder um Stralin V 4181 von der Firma Weserland.

Ein so imprägnierter bzw. mit Bindemittel versehener Melaminharzschaumstoff wird bei einer Temperatur von etwa 200 bis 210 C° verprägt, das heißt in einer Presse formgebend verformt. Die Prägezeit beläuft sich bei Imprägnierung mit Bindemittel in schaumiger Form auf etwa 30 Sekunden. Soweit sich je nach Anteil des Bindemittels oder Aktivität des Bindemittels ein Kleben am Werkzeug einstellt, ist auch eine Verprägung unter Verwendung eines PES-Nadeldeckvlieses bevorzugt vorgesehen. Dieses dient zur Aufwertung der Oberfläche und auch zu einer höheren mechanischen Oberflächenqualität. Das Nadeldeckvlies haftet unter Umständen allein schon über das Bindemittel, das aus dem Schaumstoff austritt. Zusätzlich kann das Nadelvlies aber auch mit einem Haftvermittler versehen werden.

Verfahrensmäßig kann alternativ auch so vorgegangen werden, daß der imprägnierte Schaum zunächst in einem Ofen unterhalb einer Temperatur, bei welcher der Klebstoff zu reagieren beginnt, getrocknet wird. In dieser Form kann der Schaumstoff dann beispielsweise zwischengelagert werden. Vorteilhaft ergibt sich eine kürzere Prägezeit. Die Ofen-Temperatur kann beispielsweise 120° C betragen, was auch vorteilhaft ist zur Aktivierung der oleophilen Mittel.

In Fig. 2 ist ein Melaminharzschaumstoff-Formteil aus Schaumstoff-Teilstücken zusammengesetzt dargestellt. Erkennbar besitzen diese Teilstücke eine flockartige Form.

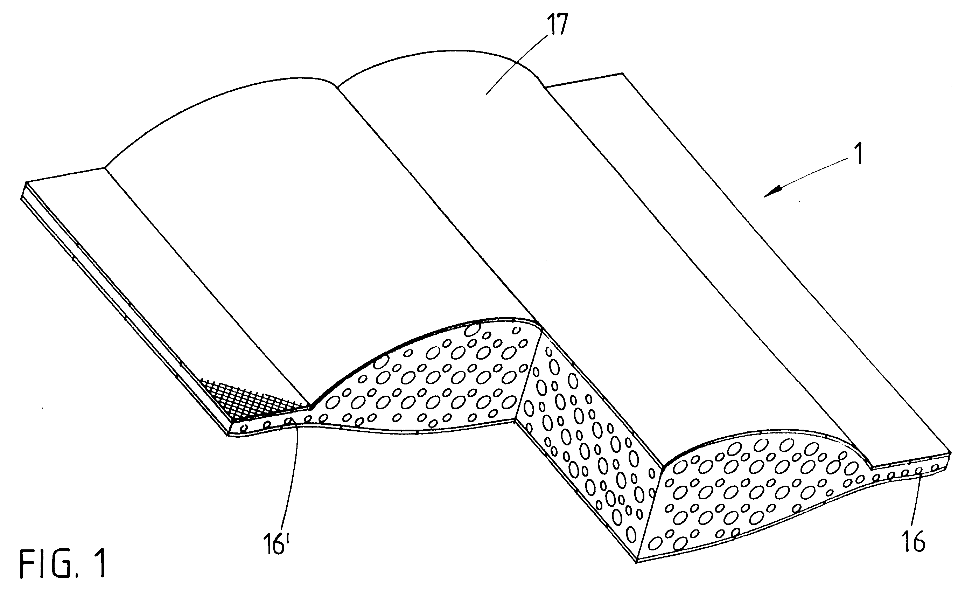

In Fig. 3 ist eine Anlage zur Imprägnierung von Melaminharzschaumstoff-Rohlingen, die hier in Plattenform vorliegen, dargestellt. Eine Rohling-Schaumstoffbahn 2 wird einem Walzenspalt 4 zugeführt, der aus zwei sich gegensinnig drehenden Walzen 5 und 6 gebildet ist. Es sind Leitrollen 14 und Führungen 15 für den Schaumstoff-Rohling vorgesehen. Der Walzenspalt 4 ist wesentlich kleiner als die Dicke d des Rohlings 2. In den Walzenspalt wird das Bindemittel 3 in schaumiger Form eingegeben, das aus Zuführleitungen 7,8 zugeführt wird. Durch die Drehung der Walzen 5,6 wird das aus den Zuführleitungen 7,8 austretende Bindemittel 3 dem Rohling 2 und dem Walzenspalt 4 zugeführt. Gleichwohl ist noch eine Aufnahmeform 9 vorgesehen, um Überschußmengen aufzufangen. Hinter den Walzenspalt 4 stellt sich der Rohling 2 wieder auf seine ursprüngliche Dicke zurück. Es laufen dann seitlich Deckvliese 10,11 ein, die jedoch nicht notwendig vorgesehen zu sein brauchen. Diese werden durch gleichfalls sich gegensinnig drehende Walzen, 12,13 auf die breitflächigen Oberflächen eines Rohlings 2 aufgebracht. Nachfolgend wird eine Trennung der Schaumstoffbahn mit aufgebrachtem beidseitigen Vlies in beispielsweise Plattenform vorgenommen. Diese Platten werden sodann in den Pressen unter Wärmeeinwirkung verformt in ein Formteil, wie es beispielsweise in den Figuren 1 und 2 dargestellt ist.

Die in der vorstehenden Beschreibung, der Zeichnung und den Ansprüchen offenbarten Merkmale der Erfindung können sowohl einzeln als auch in beliebiger Kombination für die Verwirklichung der Erfindung von Bedeutung sein. Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen.

## Patentansprüche

1. Verfahren zur Herstellung eines Formteils aus duroplastischem Melaminharzschaumstoff, dadurch gekennzeichnet, daß ein Formteil-Rohling aus Melaminharzschaumstoff mit einem wärmeaushärtenden Bindemittel wie Melaminharz oder Phenolharz versehen wird, wobei das Bindemittel in schaumiger Form zugegeben wird, und eine Verpressung unter Wärmeeinwirkung durchgeführt wird.

2. Verfahren nach Anspruch 1, dadurch gekennzeichnet, daß das Bindemittel auf die Oberfläche des Formteil-Rohlings aufgebracht wird.

3. Verfahren nach Anspruch 1, dadurch gekennzeichnet, daß der Formteil-Rohling mit dem Bindemittel imprägniert wird.

4. Verfahren nach Anspruch 1, dadurch gekennzeichnet, daß das Bindemittel in wässriger Form vorliegt.

5. Verfahren nach Anspruch 1, dadurch gekennzeichnet, daß das Bindemittel Phenolharz oder Melaminharz in wässriger oder schaumiger Form ist.

6. Verfahren nach Anspruch 1, dadurch gekennzeichnet, daß eine Mehrzahl von Teilstücken aus mit Bindemittel, insbesondere Melaminharz, versehenem Melaminharzschaumstoff in einer Pressform platten- oder blockartig miteinander verpreßt werden.

7. Verfahren nach Anspruch 6, dadurch gekennzeichnet, daß die Teilstücke vor Eingabe in die Pressform flockenartig aufbereitet werden.

8. Verfahren nach Anspruch 7, dadurch gekennzeichnet, daß die Oberflächen der Teilstücke vor einer Verpressung zumindest teilweise mit Bindemittel versehen werden.

9. Verfahren nach Anspruch 8, dadurch gekennzeichnet, daß als Bindemittel Melaminharz in Pulverform verwendet wird.

10. Verfahren nach Anspruch 3, dadurch gekennzeichnet, daß das Imprägnierungsmittel mit einem Zusatz zur hydrophoben Einstellung versehen wird.

11. Verfahren nach Anspruch 3, dadurch gekennzeichnet, daß das Imprägnierungsmittel mit einem Zusatz zur oleophoben Einstellung versehen wird.

12. Formteil aus duroplastischem Melaminharzschaumstoff, dadurch gekennzeichnet, daß das Formteil aus einer Mehrzahl von mit einem wärmeaushärtenden Bindemittel wie Melaminharz oder Phenolharz, welches in schaumiger Form vorliegt, versehenen Melaminharzschaumstoff-Teilstücken zusammengesetzt ist.

## Claims

1. Method for the manufacture of a moulding of thermosetting plastic melamine resin foam, characterised in that a moulding blank of melamine resin foam is provided with a thermosetting binder such as melamine resin or phenolic resin, wherein the binder is added in foam form and pressing is carried out under the influence of heat.

2. Method according to claim 1, characterised in that the binder is applied to the surface of the moulding blank.

3. Method according to claim 1, characterised in that the moulding blank is impregnated with the binder.

4. Method according to claim 1, characterised in that the binder is present in aqueous form.

5. Method according to claim 1, characterised in that the binder is phenolic resin or melamine resin in aqueous or foam form.

6. Method according to claim 1, characterised in that a plurality of pieces made of melamine resin foam provided with binder, in particular melamine resin, are pressed together in a slab or block shape in a compression mould.

7. Method according to claim 6, characterised in that the pieces are prepared in flake form before introduction into the compression mould.

8. Method according to claim 7, characterised in that the surfaces of the pieces are at least partially provided with binder before pressing.

9. Method according to claim 8, characterised in that melamine resin in powdered form is used as the binder.

10. Method according to claim 3, characterised in that the impregnating agent is provided with an additive for water-repellent adjustment.

11. Method according to claim 3, characterised in that the impregnating agent is provided with an additive for oil-repellent adjustment.

12. Moulding of thermosetting plastic melamine resin foam, characterised in that the moulding is composed of a plurality of melamine resin foam pieces provided with a thermosetting binder such as melamine resin or phenolic resin which is present in foam form.

## Revendications

1. Procédé de fabrication d'une pièce moulée en matériau alvéolaire à base de résine mélamine, thermodurcissable, caractérisé en ce qu'une ébauche de pièce moulée en matériau alvéolaire en résine mélamine est pourvue d'un liant durcissant à la chaleur, tel qu'une résine mélamine ou une résine phénol, le liant étant ajouté sous forme mousseuse et un pressage étant effectué avec action de chaleur.

2. Procédé selon la revendication 1, caractérisé en ce que le liant est appliqué sur la surface de l'ébauche de la pièce moulée.

3. Procédé selon la revendication 1, caractérisé en ce que l'ébauche de pièce moulée est imprégnée avec le liant.

4. Procédé selon la revendication 1, caractérisé en ce que le liant se présente sous forme aqueuse.

5. Procédé selon la revendication 1, caractérisé en ce que le liant est une résine phénol ou mélamine se présentant sous forme aqueuse ou mousseuse.

6. Procédé selon la revendication 1, caractérisé en ce qu'une pluralité de morceaux, constituant des parties, d'un matériau alvéolaire à base de résine mélamine pourvu d'un liant en particulier d'une résine mélamine, sont comprimés ensemble en plaques ou en blocs, dans un moule à presse.

7. Procédé selon la revendication 6, caractérisé en ce que les morceaux constituant des parties sont préparés en flocons avant introduction dans le moule à presse.

8. Procédé selon la revendication 3, caractérisé en ce que les surfaces des morceaux constituant des parties sont pourvues avant pressage au moins partiellement du liant.

9. Procédé selon la revendication 8, caractérisé en ce qu'on utilise comme liant une résine mélamine se présentant sous forme pulvérulente.

10. Procédé selon la revendication 3, caractérisé en ce que l'agent d'imprégnation est pourvu d'un apport pour établir sa nature hydrophobe.

11. Procédé selon la revendication 3, caractérisé en ce que l'agent d'imprégnation est pourvu d'un apport destiné à établir sa nature oléophobe.

12. Pièce moulée en matériau alvéolaire à base de résine mélamine, thermodurcissable, caractérisée en ce que la pièce moulée est composée d'une pluralité de morceaux constituant des parties, en matériau alvéolaire à base de résine mélamine, pourvues d'un liant thermodurcissable, tel que la résine mélamine ou la résine phénolique, se présentant sous forme mousseuse.
